**Europäisches Patentamt**

**European Patent Office**

**Office européen des brevets**

(11) Publication number: **0 163 832**
**B1**

# EUROPEAN PATENT SPECIFICATION

(45) Date of publication of patent specification: **19.04.89**

(21) Application number: **85103469.4**

(22) Date of filing: **09.09.81**

(60) Publication number of the earlier application in accordance with Art. 76 EPC: **0 060 271**

(51) Int. Cl.⁴: **F 16 B 37/12,** F 16 B 39/28 // F16B39/32

(54) **Improved laminated lock nut.**

(30) Priority: **16.09.80 US 187833**

(43) Date of publication of application:
**11.12.85 Bulletin 85/50**

(45) Publication of the grant of the patent:
**19.04.89 Bulletin 89/16**

(84) Designated Contracting States:
**DE FR GB**

(56) References cited:
**FR-A-2 397 558**
**US-A-1 813 640**
**US-A-2 382 748**
**US-A-2 581 641**
**US-A-3 461 935**

(73) Proprietor: **REYNOLDS, Richard Lee**
**6 Stratford Lane**
**Ho-Ho-Kus NJ 07423 (US)**

(72) Inventor: **REYNOLDS, Richard Lee**
**6 Stratford Lane**
**Ho-Ho-Kus NJ 07423 (US)**

(74) Representative: **Newens, Leonard Eric et al**
**F.J. CLEVELAND & CO. 40/43 Chancery Lane**
**London WC2A 1JQ (GB)**

Courier Press, Leamington Spa, England.

EP 0 163 832 B1

## Description

My invention relates to a laminated free-spinning nut having at least two washer segments.

Such a nut is, for example, sold by Peterson-American Corporation under the trademark "Elephant". It has stacked aligned multiple threaded discs retained by a steel outer hexagonal shaped cage.

Such a nut is free running until seated. Locking load is applied by additional rotation after seating, which compresses and partially flattens the conical spring discs with resulting mechanical interference on the thread flanks due to the change in hole size as the conical disc flattens. This results in thread interference that resists unloading that might otherwise occur as a result of vibration. Thus, the independently loaded conical spring threaded segments when flattened create a thread interference that tends to lock the nut against rotation, or loosening, when it is subjected to vibration.

As compared to other free spinning lock nuts, this nut effects a dimensional change under loading. It has a conical spring action that enables it to be counter rotated over half a turn or so without loss of total load or loss of interference.

However, the known laminated lock nut, described above, requires for positive locking a secondary operation or adjustment to align holes for cotter key insertion, wiring, or requires mechanical nut deformation into a slot or recess. Further, in the prior art, the loading on the threads of the nut segments is non-uniform, to the extent such that the stress is concentrated in the first thread adjacent the bearing surface. At that position the stress may be as much as a factor of two or more higher than the average stress in the remaining threads.

GB—A—1,193,751 (& US—A—3461935) describes a self-locking nut comprising a polygonal housing or cage open at least at one end for passage of a screw thereinto and containing at least one conical segment disposed between end plates having an external contour to engage with the housing which are flat on the side while being contoured on the other to fit the abutting surface of a resilient plate. Similarly in DE—A—2829 385 (& FR—A—2397558) a self-locking nut is provided including a cage with a retaining component and an annular thread-forming assembly. Inside the cage there are at least two ring-shaped components of equal size each of which is provided with a threaded section. The outer, lower and upper surfaces of the thread of each ring-shaped component, crossways to the axis, has flat continuous stop surfaces, so that the strength of each component is instant.

US—A—1,813,640 describes a nut lock internally toothed with a ratchet profile in combination with a longitudinally grooved bolt shank wherein the nut lock comprises a nut with an interrupted annular surface, a ring within the nut having a tongue extending into the grooves in the bolt shank and a toothed portion for engagement with the annular surface, a tongue extending endwise from the ring in an external direction and a plate thereof, and tension means to induce the ring to effect the engagement referred to, the tongue serving as a handle to effect the disengagement of the ring.

It is also known from the prior art, see for example DE—A—2829385 (& FR—A—2397558) and GB—A—1193751 (& US—A—3461935) to provide a laminated free-spinning nut having at least two washer segments and in which at least one of the segments is formed of a spring material that returns to its original form following release of the loading force. The present invention provides an improvement to such an arrangement.

According to the present invention there is provided a laminated free-spinning nut having at least two washer segments at least one of said segments being of a spring material that returns substantially to its original form following release of the loading force, thus providing a nut characterised by a prevailing torque resisting counter-rotation, characterised in that at least one other of said segments is formed of a material which takes a permanent set upon loading.

The invention will now be described by way of example only with reference to the figures of the accompanying drawings, in which:—

The Figure is a sectional view of an improved laminated lock nut of the present invention, incorporating means for loading the threads of the conical spring segments more uniformly than was the case in known laminated nuts.

The Figure shows a nut 60 in which the bottom cone shaped spring washer segment 72 of about twice the thickness of the other two segments 68 and 70. This provides a more even distribution of the load, from bolt to nut, over the length of the threaded sections 68, 70 and 72. Thus the nut is less likely to fail by shear of the bolt, stripping of the threads, or by fatigue failures. A substantial improvement relates with no additional cost, simply by the design arrangement.

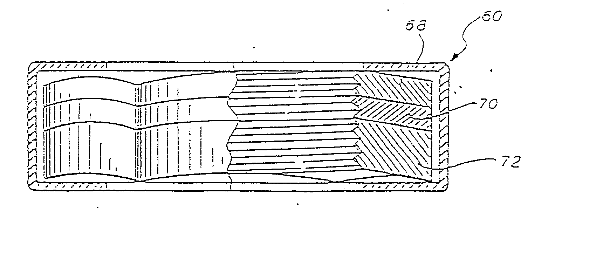

Three laminated segments are shown in the Figure but less or more for example two or four could be used. An automatic lock plate as shown in Figures 1 to 7 of parent application EP—A—60271 could be added to the nut of the Figure if desired.

In the embodiment shown in the accompanying drawing the components, including the conical spring segments, are made of heat treated spring steel as a preferred material. In the improved nut a prevailing torque characteristic (interference after counter rotation), is incorporated by means of a non-heat-treatable washer segment in the nut that is permanently flattened by the nut loading. This feature is significant to bearing applications that require bearing clearance adjustment.

Previous designs of the "Elephant" type nut, used conical spring segments but did not relate the non-uniform nut loading of the segments to functional deflection characteristics. The possible concentration of loading, in a nut-bolt thread fastening, nearly two thirds of all tension loading occurs at the first thread engaged. This uneven loading of previous multiple element nuts caused accelerated deflection of the first element. The results of this accelerated deflected element caused high stress of the male threads of the bolt with possible thread shear results. Nuts previously made in this manner and commercially marketed would not meet SAE and IFI industrial requirements for strength.

It is accepted practice that nut strength shear requirements must exceed bolte tensile strength so that the mode of failure is bolt breakage.

The present invention combines the established formulae used for predicting conical washer behaviour (see SCHNORR'S Handbook for Disc Springs) with proven load distribution characteristics in nut-bolt joint applications. This combination used in association with other nut bolt tolerance standards allows for design of spring washer segments with predictable behaviour related to bolt loading. The nut design as proposed is based upon near uniform washer segment deflection and loading bottom to top.

With respect to the mechanically positive automatic lock mechanism of the invention, the lock mechanism automatically engages in a slot or grooves in the associated bolt, stud or shaft, which can be driven by hand or power tools to desired torque or clamp load requirements, and is positively locked from counter rotation. The combination of an automatic self seeking secondary lock mechanism and nut with predictable load-deflection characteristics that contributes spring loading, allows fastener loading of precise joint pre-load with the torque and clamp load tolerances of industry used power tools. This combination is particularly adaptable to loading bearings that require defined pre-load. Further, the design of this invention does not require any secondary adjustment for precise loading.

## Claim

A laminated free-spinning nut (60) having at least two washer segments (68, 70, 72), at least one of said segments being of a spring material that returns substantially to its original form following release of the loading force, thus providing a nut characterised by a prevailing torque resisting counter-rotation, characterised in that at least one other of said segments is formed of a material which takes a permanent set upon loading.

## Patentanspruch

Geschichtete, sich frei drehende Mutter (60) mit wenigstens zwei Scheibensegmenten (68, 70, 72), wobei wenigstens eines dieser Segmente aus einem federelastischen Werkstoff ist, der nach Aufheben der belastenden Kraft in seine ungefähre Ausgangsgestalt zurückkehrt, somit eine Mutter schaffend, die sich durch ein einer Gegendrehung entgegenwirkendes herrschendes Drehmoment auszeichnet, dadurch gekennzeichnet, daß wenigstens ein weiteres der genannten Segmente aus einem Werkstoff hergestellt ist, der sich bei Belastung bleibend verformt.

## Revendication

Ecrou stratifié à rotation libre (60) comportant au moins deux segments de rondelle (68, 70, 72), l'un au moins de ces segments étant constitué en une matière élastique qui reprend sensiblement sa forme initiale lorsque la force de la charge cesse d'être appliquée, en créant ainsi un écrou caractérisé par un couple dominant résistant à une rotation en sens inverse, caractérisé en ce qu'un autre segment au moins est constitué en une matière qui prend une position permanente sous l'action de la charge.